# FASCICULE DE BREVET EUROPEEN

(11) **EP 2 644 022 B1**
(45) Date de publication et mention de la délivrance du brevet: **20.04.2016**
(21) Numéro de dépôt: 13160851.5
(22) Date de dépôt: 25.03.2013
(51) Int. Cl.: A01G 17/08

(54) **Dispositif d'alimentation et de pose d'agrafes de palissage**
Vorrichtung zum Ausgeben und Anbringen von Spalierklammern
Device for supplying and installing tying clips

(30) Priorité: 29.03.2012 FR 1252845
(43) Date de publication de la demande: 02.10.2013
(73) Titulaire: Tomasini, Daniel, 10200 Proverville (FR)
(72) Inventeur: Tomasini, Daniel, 10200 Proverville (FR); Tomasini, Arnaud, 10200 Proverville (FR); Feliot, Georges, 78330 Fontenay-le-Fleury (FR)
(74) Mandataire: Oudin, Stéphane

(56) Documents cités:
- FR-A- 1 594 631
- FR-A1- 2 750 290
- FR-A1- 2 839 611
- FR-A1- 2 927 225
- FR-A1- 2 932 061
- US-A- 5 971 206

## Description

### Domaine technique

La présente invention concerne un dispositif d'alimentation et de pose d'agrafes destinées au maintien, rapprochés l'un de l'autre, de deux fils tendus, notamment pour le palissage de la vigne.

### Technique antérieure

Dans de nombreuses applications, il est nécessaire de maintenir par une agrafe, à proximité l'un de l'autre, deux fils tendus qui sont soumis à des forces transversales respectives tendant à les écarter mutuellement l'un de l'autre. L'une de ces applications est le palissage de la vigne où les forces tendant à écarter les deux fils sont créées par la végétation palissée, serrée entre les deux fils.

Dans le domaine des dispositifs de pose des agrafes de palissage de vigne, on connaît déjà un dispositif de pose des agrafes mis en place sur un véhicule porte-outil enjambeur et comportant un couloir de distribution situé sur le côté des deux fils dans un plan transversal parallèle aux deux fils et délimité par deux rails longitudinaux, une roue d'entraînement par adhérence, pour l'entraînement intermittent du barreau d'agrafes de palissage disposé transversalement par rapport au couloir de distribution, un poste de détachement et de poussée transversale des agrafes vers les fils situé sous l'extrémité du couloir de distribution, comportant un poussoir à mouvement alternatif et couplé mécaniquement à ladite roue de manière à amener une nouvelle agrafe au poste après le retour en arrière du poussoir, et à actionner le poussoir pour assurer la pose de l'agrafe après arrêt de la roue.

Ce genre de dispositif de pose est classiquement actionné par des actionneurs hydrauliques présentant un certain nombre d'inconvénients. Ainsi, sur ces derniers, les fuites d'huiles, à la suite notamment de rupture de flexibles hydrauliques, sont relativement fréquentes et peuvent faire mourir les plantations et polluer le sol car les fluides hydrauliques sont chauds et toxiques. De même, ces fluides hydrauliques peuvent provoquer des brûlures au conducteur du véhicule porte-outil lors d'une fuite.

En outre, certains dispositifs de pose utilisent de nombreuses pièces soumises à l'usure telles que des poulies, courroies, engrenages, ...etc. Ces dispositifs nécessitent donc une maintenance régulière et coûteuse.

Enfin, les dispositifs connus ne permettent de mettre dans le couloir de distribution qu'un seul barreau d'agrafes. Il est donc nécessaire d'arrêter le palissage, souvent au milieu d'une rangée, pour mettre en place un nouveau barreau augmentant ainsi le temps de travail.

Un dispositif de pose d'agrafes est décrit dans FR 2 932 061 A1.

### Exposé de l'invention

Le but de la présente invention est donc de pallier les inconvénients précédemment cités et de proposer une alternative aux dispositifs de pose d'agrafes déjà connus. Ainsi, la présente invention a pour objet un dispositif d'alimentation et de pose d'agrafes permettant de stocker plusieurs barreau d'agrafes dans un espace réduit et de réduire significativement, d'une part, le risque de pollution des plantations et du sol et, d'autre part, le risque d'accident lors de l'utilisation dudit dispositif.

Conformément à l'invention, il est donc proposé un dispositif d'alimentation et de pose d'agrafes agencées pour maintenir deux fils tendus rapprochés l'un de l'autre et étant assemblées pour former un barreau continu d'agrafes successives, ledit dispositif étant remarquable en ce qu'il comporte :
- un magasin de stockage muni au moins d'un logement agencé pour contenir et permettre le coulissement d'un barreau d'agrafes, d'une ouverture disposée au droit de l'une des extrémités du logement, d'un orifice disposé au droit de l'autre extrémité du logement et d'un piston disposé entre le barreau et l'orifice et apte à pousser le barreau d'agrafes en direction de l'ouverture sous l'action d'un fluide sous pression admis par l'orifice,
- un support muni d'au moins un flasque avant et un flasque arrière et étant apte à recevoir entre ses flasques avant et arrière le magasin de stockage, le flasque avant comportant un couloir de distribution apte à coopérer avec l'ouverture pour recevoir une agrafe issue du barreau contenu dans le logement, le flasque arrière comportant un orifice agencé pour être raccordé à un flexible d'alimentation du fluide sous pression et apte à coopérer de façon sensiblement étanche avec l'orifice du magasin de stockage pour permettre audit fluide d'entrer dans le logement,
- un poussoir à mouvement alternatif apte à coulisser dans ledit couloir de distribution pour détacher du barreau et entraîner l'agrafe positionnée dans ledit couloir de distribution.

Le poussoir est de préférence tel que, lorsqu'il se met en mouvement pour déplacer une agrafe dans le couloir de distribution, il obture l'ouverture du magasin de stockage.

Le poussoir est avantageusement mis en mouvement par un actionneur et revient, par un moyen de rappel, à sa position initiale.

Selon un mode de réalisation préféré, l'actionneur est un électro-aimant et le moyen de rappel est un ressort de rappel ou un champ magnétique.

De préférence, le piston est creux et comporte une face d'appui rigide et une paroi périphérique issue sensiblement perpendiculairement du bord périphérique de ladite face d'appui et s'étendant en direction de l'orifice, ladite paroi périphérique étant souple et déformable pour venir épouser la paroi interne dudit logement.

Avantageusement, la face d'appui comporte une entaille apte à coopérer avec une butée disposée dans l'ouverture du magasin de stockage, ladite butée étant telle qu'elle n'entrave pas la mise en place du barreau, la sortie et la pose des agrafes.

Selon un mode de réalisation préféré, le magasin de stockage comporte plusieurs ensembles ouverture-logement-orifice et est mobile par rapport au support pour positionner l'un de ses logements en position "travail".

Le flasque avant du support est de préférence tel qu'il permet la coopération du couloir de distribution et de l'ouverture du magasin de stockage associé au logement en position "travail" et qu'il obture au moins partiellement les ouvertures du magasin de stockage associées aux autres logements.

De même, le flasque arrière du support est avantageusement tel qu'il permet la coopération de son orifice avec l'orifice du magasin de stockage associé au logement en position "travail" et qu'il obture totalement les orifices du magasin de stockage associés aux autres logements.

De manière avantageuse, le mouvement du magasin de stockage est indexé.

Selon un mode de réalisation préféré, le magasin de stockage est apte à pivoter autour de son axe longitudinal entre les flasques avant et arrière du support et comporte quatre logements répartis de façon uniforme autour de l'axe longitudinal, chaque logement étant pivoté de 90° autour dudit axe longitudinal par rapport au logement adjacent.

Selon un mode de réalisation encore plus préféré, le dispositif comporte un magasin de stockage interchangeable fixé de façon amovible sur le support.

### Description sommaire des figures

D'autres avantages et caractéristiques ressortiront mieux de la description qui va suivre d'une variante d'exécution d'un dispositif d'alimentation et de pose d'agrafes, selon l'invention, en référence aux figures annexées sur lesquelles :
- la figure 1 est une vue en perspective partielle d'un barreau d'agrafes apte à être mis en place dans un dispositif d'alimentation et de pose d'agrafes, selon l'invention ;
- la figure 2 est une vue de coupe longitudinale du dispositif d'alimentation et de pose d'agrafes, selon l'invention ;
- la figure 3 est une vue en perspective du magasin de stockage d'un dispositif d'alimentation et de pose d'agrafes de la figure 2 ;
- la figure 4 est une vue en perspective partielle du dispositif d'alimentation et de pose d'agrafes de la figure 2 ;

### Meilleure manière de réaliser l'invention technique

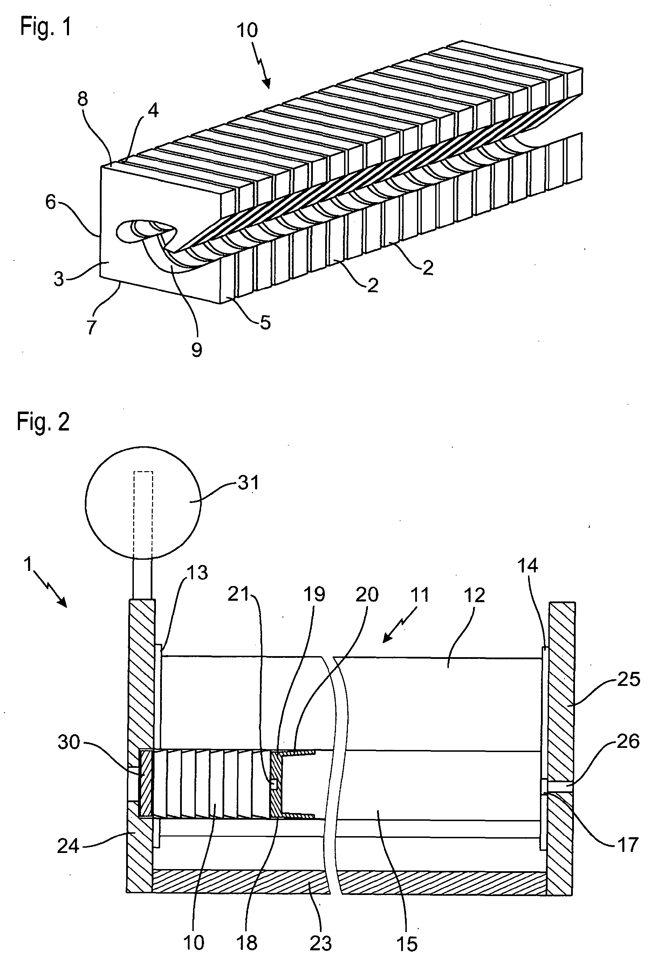

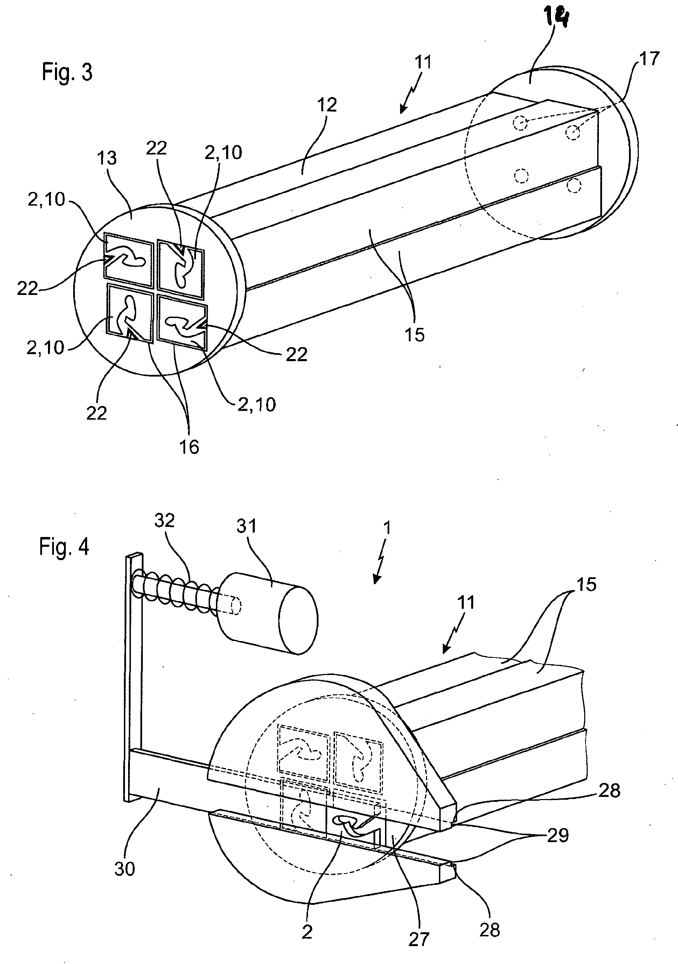

On a représenté sur les figures 1 à 4 un dispositif 1 d'alimentation et de pose d'agrafes 2 utilisées pour le maintien, rapprochés l'un de l'autre, de deux fils tendus, notamment pour le palissage de la vigne.

En référence à la figure 1, lesdites agrafes 2 présentent une forme sensiblement parallélépipédique aplatie délimitée par une paire de faces verticales 3,4 sensiblement parallèles reliées par une paire de faces longitudinales 5,6 verticales et une paire de faces transversales 7,8 horizontales. Chaque agrafe 2 présente en outre une fente 9 d'introduction et d'accrochage des fils tendus, ladite fente 9 débouchant sur les faces verticales 3,4 et l'une des faces longitudinales 5,6 verticales. Lesdites agrafes 2 sont assemblées en mettant l'une des faces verticales 3 ou 4 d'une agrafe 2 en vis-à-vis respectivement avec l'autre face verticale 4 ou 3 d'une agrafe 2 identique adjacente pour former un barreau 10 continu d'agrafes 2 successives. Lesdites agrafes 2 sont de préférence attachées entre elles par des moyens de fixation femelle et mâle non représentés et indifféremment disposés sur l'une ou l'autre des faces verticales 3,4. Le moyen de fixation femelle est disposé sur l'une des deux faces verticales 3,4 et le moyen de fixation mâle est sectionnable et disposé sur l'autre face verticale 3,4 en vis-à-vis dudit moyen de fixation femelle, lesdits moyens de fixation femelle et mâle étant de forme complémentaire et aptes à coopérer respectivement avec les moyens de fixation mâle et femelle d'agrafes identiques pour les lier entre elles par coincement afin de former un barreau 10.

En référence aux figure 1 à 4, ledit dispositif 1 comporte un magasin de stockage 11 muni d'un corps 12 et de deux flasques avant 13 et arrière 14 solidaire chacun d'une des extrémités dudit corps 12.

On désigne ici par "avant" le coté du dispositif 1 par lequel une agrafe 2 passe pour être posée sur les fils tendus et par "arrière" le coté opposé.

Ledit corps 12 comporte au moins un logement 15 agencé pour contenir un barreau 10 d'agrafes 2, ledit logement 15 débouchant de chaque coté dudit corps 12, ledit logement 15 étant dimensionné de sorte que le barreau 10 d'agrafes 2 puisse coulisser aisément à l'intérieur dudit logement 15 le long de son axe longitudinal.

Le flasque avant 13 comporte au moins une ouverture 16 disposée au droit de l'extrémité du logement 15, ladite ouverture 16 étant telle que ses formes et dimensions permettent le passage d'une agrafe 2 et d'un barreau 10 d'agrafes 2 pour permettre la sortie d'une agrafe 2 pour sa pose sur les fils tendus et le réapprovisionnement en barreau 10 du magasin de stockage 11.

Le flasque arrière 14 comporte au moins un orifice 17 disposé au droit de l'autre extrémité du logement 15. L'orifice 17 est de préférence de forme circulaire et de dimensions plus petites que celles de la section transversale du logement 15.

Le magasin de stockage 11 comporte en outre, dans le logement 15 du corps 12, un piston 18 disposé entre le barreau 10 et l'orifice 17 du flasque arrière 14 et apte à pousser le barreau 10 d'agrafes 2 en direction de l'ouverture 16 du flasque avant 13 sous l'action d'un fluide sous pression admis par ledit orifice 17. Le piston 18 est de préférence creux et comporte une face d'appui 19 rigide agencée pour être en contact avec la face arrière du barreau 10 placé dans le logement 15, une paroi périphérique 20 issue sensiblement perpendiculairement du bord périphérique de ladite face d'appui 19 et s'étendant en direction de l'orifice 17 du flasque arrière 14. Ladite paroi périphérique 20 est avantageusement souple et déformable pour venir épouser la paroi interne dudit logement 15 afin d'avoir un contact sensiblement étanche et de permettre une mise en mouvement dudit piston 18 et du barreau 10 d'agrafes 2 sous l'effet de la pression du fluide.

La face d'appui 19 de chaque piston 18 comporte une entaille 21 apte à coopérer avec une butée 22 pour éviter que ledit piston 18 ne sorte du logement 15 du magasin de stockage 11 sous l'effet de la pression du fluide. Ladite butée 22 est disposée dans l'ouverture 16 du flasque avant 13 du magasin de stockage 11 et est telle qu'elle n'entrave pas la mise en place du barreau 10, la sortie et la pose des agrafes 2.

Le dispositif 1 comporte un support 23 muni d'au moins un flasque avant 24 et un flasque arrière 25, ledit support 18 étant apte à recevoir, entre ses flasques avant 24 et arrière 25, le magasin de stockage 11.

Le flasque arrière 25 du support 23 comporte un orifice 26 agencé pour être raccordé à un flexible d'alimentation non représenté du fluide sous pression et apte à coopérer de façon sensiblement étanche avec l'orifice 17 du flasque arrière 14 du magasin de stockage 11 pour permettre audit fluide d'entrer dans le logement 15 et ainsi de déplacer le piston 18 à l'intérieur dudit logement 15.

Le flasque avant 24 du support 23 comporte un couloir de distribution 27 transversal disposé perpendiculairement à l'axe longitudinal du magasin de stockage 11 et apte à coopérer avec l'ouverture 16 du flasque avant 13 du magasin de stockage 11 pour recevoir une agrafe 2 issue du barreau 10 contenu dans logement 15, ledit barreau 10 étant mis en mouvement par le piston 18 sous l'effet de la pression du fluide.

Ce couloir de distribution 27 est au moins délimité par deux parois longitudinales 28 contre lesquelles glissent les faces transversales 7,8 horizontales de l'agrafe 2 prête à être posée sur les fils tendus et par une paroi frontale 29 contre laquelle glisse la face verticale 3 de ladite agrafe 2.

L'agrafe 2 située à l'extrémité du barreau 10 qui se trouve dans le couloir de distribution 27 en contact avec lesdites parois longitudinales 28 et frontale 29, peut alors être soumise à une poussée transversale F horizontale en direction des fils tendus, sous l'action d'un poussoir 30 à mouvement alternatif apte à également coulisser dans ledit couloir de distribution 27.

Le poussoir 15 applique donc sur ladite agrafe 2 une poussée transversale F suffisante pour, d'une part, la détacher de l'agrafe 2 suivante du barreau 10 disposée immédiatement derrière elle et se trouvant encore dans le magasin de stockage 11 et, d'autre part, pour que l'agrafe 2 vienne s'engager sur les fils tendus et que ces derniers viennent s'accrocher dans la fente 9.

Ledit poussoir 30 est mis en mouvement par un actionneur 31 pour exercer ladite poussée transversale F et placer sur les fils tendus l'agrafe 2 présente dans ledit couloir de distribution 27 et revient par un moyen de rappel 32 à sa position initiale dans laquelle il libère l'ouverture 16 du magasin de stockage 11, laissant l'agrafe 2 suivante se placer dans ledit couloir de distribution 27 sous l'action du piston 18.

Par ailleurs, le poussoir 30 est tel que, lorsqu'il se met en mouvement, il obture l'ouverture 16 du flasque avant 13 du magasin de stockage 11 afin d'éviter que l'agrafe 2 suivante ne se place dans le couloir de distribution 27.

Afin d'éviter les risques de fuites d'huile, le fluide sous pression utilisé est de l'air comprimé issu, par exemple, d'un compresseur électrique ou d'une bouteille.

Pour les mêmes raisons, l'actionneur 31 est avantageusement un électro-aimant et le moyen de rappel 32 est un ressort de rappel de préférence hélicoïdal.

Ces actionneur 31 et moyen de rappel 32 pourront être remplacés par tout moyen procurant les mêmes effets tels que, par exemple, un vérin aéraulique ou électrique ou encore un champ magnétique, sans sortir du cadre de la présente invention.

Selon un mode de réalisation préférentiel, le magasin de stockage 11 comporte plusieurs ensembles ouverture 16-logement 15-orifice 17. Ainsi, le magasin de stockage 11 comprend un corps 12 avec plusieurs logements 15, un flasque avant 13 muni d'une ouverture 16 disposée au droit de l'extrémité de chaque logement 15 et un flasque arrière 14 muni d'un orifice 17 disposé au droit de l'autre extrémité de chaque logement 15. Cette configuration permet de limiter le nombre de rechargement de barreaux 10 d'agrafes 2, de limiter le nombre d'arrêt de travail de palissage et donc d'augmenter la productivité.

Toutefois, dans cette configuration, le dispositif 1 comporte un magasin de stockage 11 mobile par rapport au support 23 du dispositif 1 pour positionner l'un de ses logements 15 en position "travail" dans laquelle les agrafes 2 du barreau 10 contenu dans ledit logement 15 sont positionnées pour être posées sur les fils tendus. Cette position "travail" est telle que l'ouverture 16 du flasque avant 13 du magasin de stockage 11 et l'orifice 17 du flasque arrière 14 du magasin de stockage 11 associés à l'un des logements 15 du corps 12 du magasin de stockage 11 sont respectivement en vis-à-vis du couloir de distribution 27 du flasque avant 24 du support 23 et de l'orifice 26 du flasque arrière 25 du support 23. Ladite position de "travail" permet donc l'admission du fluide sous pression dans le logement 15 concerné et la mise en place dans le couloir de distribution 27 de la première agrafe 2 du barreau 10 contenu dans ledit logement 15.

Le mouvement du magasin de stockage 11 est de préférence indexé pour que le positionnement d'un logement 15 dans la position "travail" se fasse sans peine.

Pour des raisons évidentes d'encombrement réduit, le magasin de stockage 11 est apte à pivoter autour de son axe longitudinal entre les flasques avant 24 et arrière 25 du support 23 et le corps 12 est un barillet comportant quatre logements 15 répartis de façon uniforme autour de l'axe longitudinal dudit magasin de stockage 11. Chaque logement 15 est pivoté de 90° autour dudit axe longitudinal par rapport au logement 15 adjacent pour que chaque logement 15 se trouve dans la position du logement 15 adjacent lors d'une rotation de 90° du magasin de stockage 11.

Le flasque avant 24 du support 23 est tel qu'il permet la coopération du couloir de distribution 27 et de l'ouverture 16 du flasque avant 13 du magasin de stockage 11 associé au logement 15 du corps 12 en position "travail" et qu'il obture au moins partiellement les ouvertures 16 du flasque avant 13 du magasin de stockage 11 associées aux autres logements 15.

De même, le flasque arrière 25 du support 23 est tel qu'il permet la coopération de son orifice 26 avec l'orifice 17 du flasque arrière 14 du magasin de stockage 11 associé au logement 15 du corps 12 en position "travail" et qu'il obture totalement les orifices 17 du flasque arrière 14 associés aux autres logements 15.

L'Homme du métier n'aura aucune difficulté à concevoir une liaison sensiblement étanche permettant d'obtenir la configuration du flasque arrière 25 du support 23 décrite ci-dessus.

Selon un mode de réalisation préférentiel, pour augmenter encore la productivité, le dispositif 1 d'alimentation et de pose d'agrafes 2 comporte un magasin de stockage 11 interchangeable fixé de façon amovible sur le support 23, par des moyens de fixations rapides (non représentés sur les figures). Ainsi, au lieu de remplir les logements 15 avec des barreaux 10 d'agrafes 2, le conducteur du véhicule porte-outil disposera de plusieurs magasin de stockage 11 préalablement remplis de barreaux 10 d'agrafes 2 et remplacera le magasin de stockage 11 vide par un magasin de stockage 11 rempli.

Pour des raisons de réglage et de positionnement par rapport aux fils tendus, le dispositif 1 d'alimentation et de pose d'agrafes 2, qui est mis en place sur un véhicule porte-outil, est disposé sur un bras articulé pour pouvoir le positionner au plus près des fils tendus.

Enfin, au lieu d'avoir une forme sensiblement rectangulaire, l'agrafe 2 pourrait avoir également une forme pratiquement carrée, ou même ronde ou elliptique sans pour autant sortir du cadre de l'invention. Les termes "faces longitudinales 5,6 verticales" et "faces transversales 7,8 horizontales" seront éventuellement à adapter.

### Possibilité d'application industrielle

Comme décrit précédemment, le dispositif 1 d'alimentation et de pose d'agrafes 2 destinées au maintien, rapprochés l'un de l'autre, de deux fils tendus, selon l'invention, est principalement destiné à être utilisé pour le palissage de la vigne, mais il peut également être utilisé pour le maintien de toute plantation en ligne ou encore pour le maintien de haies.

Enfin, il est clair que la présente invention ne se limite pas aux seules formes d'exécution de dispositif 1 d'alimentation et de pose d'agrafes 2 ; elle en embrasse, au contraire, toutes les variantes de réalisation et d'application respectant le même principe, dans le cadre des revendications annexées.

## Revendications

1. Dispositif (1) d'alimentation et de pose d'agrafes (2) agencées pour maintenir deux fils tendus rapprochés l'un de l'autre et étant assemblées pour former un barreau (10) continu d'agrafes (2) successives, ledit dispositif (1) étant **caractérisé en ce qu'**il comporte :
- un magasin de stockage (11) muni au moins d'un logement (15) agencé pour contenir et permettre le coulissement d'un barreau (10) d'agrafes (2), d'une ouverture (16) disposée au droit de l'une des extrémités du logement (15), d'un orifice (17) disposé au droit de l'autre extrémité du logement (15) et d'un piston (18) disposé entre le barreau (10) et l'orifice (17) et apte à pousser le barreau (10) d'agrafes (2) en direction de l'ouverture (16) sous l'action d'un fluide sous pression admis par l'orifice (17),
- un support (23) muni d'au moins un flasque avant (24) et un flasque arrière (25) et étant apte à recevoir entre ses flasques avant (24) et arrière (25) le magasin de stockage (11), le flasque avant (24) comportant un couloir de distribution (27) apte à coopérer avec l'ouverture (16) pour recevoir une agrafe (2) issue du barreau (10) contenu dans logement (15), le flasque arrière (25) comportant un orifice (26) agencé pour être raccordé à un flexible d'alimentation du fluide sous pression et apte à coopérer de façon sensiblement étanche avec l'orifice (17) du magasin de stockage (11) pour permettre audit fluide d'entrer dans le logement (15),
- un poussoir (30) à mouvement alternatif apte à coulisser dans ledit couloir de distribution (27) pour détacher du barreau (10) et entraîner l'agrafe (2) positionnée dans ledit couloir de distribution (27).

2. Dispositif (1) selon la revendication 1 **caractérisé en ce que** le poussoir (30) est tel que, lorsqu'il se met en mouvement pour déplacer une agrafe (2) dans le couloir de distribution (27), il obture l'ouverture (16) du magasin de stockage (11).

3. Dispositif (1) selon l'une quelconque des revendications 1 ou 2 **caractérisé en ce que** le poussoir (30) est mis en mouvement par un actionneur (31) et revient par un moyen de rappel (32) à sa position initiale dans laquelle il libère l'ouverture (16) du magasin de stockage (11).

4. Dispositif (1) selon la revendication 3 **caractérisé en ce que** l'actionneur (31) est un électro-aimant.

5. Dispositif (1) selon l'une quelconque des revendications 3 ou 4 **caractérisé en ce que** le moyen de rappel (32) est un ressort de rappel ou un champ magnétique.

6. Dispositif (1) selon l'une quelconque des revendications 1 à 5 **caractérisé en ce que** le piston (18) est creux et comporte une face d'appui (19) rigide et une paroi périphérique (20) issue sensiblement perpendiculairement du bord périphérique de ladite face d'appui (19) et s'étendant en direction de l'orifice (17), ladite paroi périphérique (20) étant souple et déformable pour venir épouser la paroi interne dudit logement (15).

7. Dispositif (1) selon la revendication 6 **caractérisé en ce que** la face d'appui (19) comporte une entaille (21) apte à coopérer avec une butée (22) disposée dans l'ouverture (16) du magasin de stockage (11), ladite butée (22) étant telle qu'elle n'entrave pas la mise en place du barreau (10), la sortie et la pose des agrafes (2).

8. Dispositif (1) selon l'une quelconque des revendications 1 à 7 **caractérisé en ce que** le magasin de stockage (11) comporte plusieurs ensembles ouverture (16)-logement (15)-orifice (17) et **en ce que** le magasin de stockage (11) est mobile par rapport au support (23) pour positionner l'un de ses logements (15) en position "travail".

9. Dispositif (1) selon la revendication 8 **caractérisé en ce que** le flasque avant (24) du support (23) est tel qu'il permet la coopération du couloir de distribution (27) et de l'ouverture (16) du magasin de stockage (11) associé au logement (15) en position "travail" et qu'il obture au moins partiellement les ouvertures (16) du magasin de stockage (11) associées aux autres logements (15).

10. Dispositif (1) selon l'une quelconque des revendications 8 ou 9 **caractérisé en ce que** le flasque arrière (25) du support (23) est tel qu'il permet la coopération de son orifice (26) avec l'orifice (17) du magasin de stockage (11) associé au logement (15) en position "travail" et qu'il obture totalement les orifices (17) du magasin de stockage (11) associés aux autres logements (15).

11. Dispositif (1) selon l'une quelconque des revendications 8 ou 10 **caractérisé en ce que** le mouvement du magasin de stockage (11) est indexé.

12. Dispositif (1) selon l'une quelconque des revendications 8 à 11 **caractérisé en ce que** le magasin de stockage (11) est apte à pivoter autour de son axe longitudinal entre les flasques avant (24) et arrière (25) du support (23) et comporte quatre logements (15) répartis de façon uniforme autour dudit axe longitudinal, chaque logement (15) étant pivoté de 90° autour dudit axe longitudinal par rapport au logement (15) adjacent.

13. Dispositif (1) selon l'une quelconque des revendications 1 à 12 **caractérisé en ce qu'**il comporte un magasin de stockage (11) interchangeable fixé de façon amovible sur le support (23).

## Patentansprüche

1. Vorrichtung (1) zum Zuführen und Anbringen von Heftklammern (2), die angeordnet sind, um zwei gespannte Fäden nah beieinander zu halten, und die zusammengefügt sind, um einen durchgehenden Stab (10) von aufeinander folgenden Heftklammern (2) zu bilden, wobei die besagte Vorrichtung (1) **dadurch gekennzeichnet ist, dass** sie folgendes umfasst:
- ein Ablagemagazin (11), das mit zumindest einem Sitz (15) versehen ist, der angeordnet ist, um einen Stab (10) an Heftklammern (2) aufzunehmen und dessen Durchgleiten zu ermöglichen, mit einer Öffnung (16), die direkt unter einem der Enden des Sitzes (15) angeordnet ist, mit einer Öffnung (17), die direkt unter dem anderen Ende des Sitzes (15) angeordnet ist, und mit einem Kolben (18), der zwischen dem Stab (10) und der Öffnung (17) angeordnet ist und imstande ist, den Stab (10) an Heftklammern (2) unter Einwirkung einer unter Druck stehenden Flüssigkeit in Richtung der Öffnung (16) zu schieben, die durch die Öffnung (17) eingelassen wird,
- einen Halter (23), der mit zumindest einem vorderen Flansch (24) und einem hinteren Flansch (25) versehen ist und imstande ist, zwischen seinen vorderen (24) und hinteren (25) Flanschen das Ablagemagazin (11) aufzunehmen, wobei der vordere Flansch (24) einen Verteilerkorridor (27) umfasst, der imstande ist, mit der Öffnung (16) zusammenzuwirken, um eine Heftklammer (2) aus dem Stab (10) zu erhalten, der im Sitz (15) enthalten ist, wobei der hintere Flansch (25) eine Öffnung (26) umfasst, die angeordnet ist, um an einen Zuführschlauch der unter Druck stehenden Flüssigkeit angeschlossen zu werden, und die imstande ist, in spürbar dichter Form mit der Öffnung (17) des Ablagemagazins (11) zusammenzuwirken, um es der besagten Flüssigkeit zu ermöglichen, in den Sitz (15) einzuströmen,
- einen Stößel (30) mit Wechselbewegung, der imstande ist, durch den besagten Verteilerkorridor (27) zu gleiten, um die Heftklammer (2), die sich im besagten Verteilerkorridor (27) befindet, vom Stab (10) zu lösen und anzutreiben.

2. Vorrichtung (1) nach Anspruch 1, **dadurch gekennzeichnet, dass** der Stößel (30) derart ausgeführt ist, dass wenn er sich in Bewegung setzt, um eine Heftklammer (2) durch den Verteilerkorridor (27) zu bewegen, er die Öffnung (16) des Ablagemagazins (11) verschließt.

3. Vorrichtung (1) nach irgendeinem der Ansprüche 1 oder 2, **dadurch gekennzeichnet, dass** der Stößel (30) durch einen Steller (31) in Bewegung versetzt wird, und durch ein Rückholmittel (32) in seine Ausgangsposition zurückkehrt, in der er die Öffnung (16) des Ablagemagazins (11) freigibt.

4. Vorrichtung (1) nach Anspruch 3, **dadurch gekennzeichnet, dass** der Steller (31) ein Elektromagnet ist.

5. Vorrichtung (1) nach irgendeinem der Ansprüche 3 oder 4, **dadurch gekennzeichnet, dass** das Rückholmittel (32) eine Rückholfeder oder ein Magnetfeld ist.

6. Vorrichtung (1) nach irgendeinem der Ansprüche 1 bis 5, **dadurch gekennzeichnet, dass** der Kolben (18) hohl ist und eine steife Anlagefläche (19) und eine periphere Wand (20) umfasst, die in etwa senkrecht aus dem peripheren Rand der besagten Anlagefläche (19) hervortritt und sich in Richtung der Öffnung (17) erstreckt, wobei die besagte periphere Wand (20) flexibel und verformbar ist, um sich an der Innenwand des besagten Sitzes (15) anzulegen.

7. Vorrichtung (1) nach Anspruch 6, **dadurch gekennzeichnet, dass** die Anlagefläche (19) eine Kerbe (21) umfasst, die imstande ist, mit einem Anschlag (22) zusammenzuwirken, der in der Öffnung (16) des Ablagemagazins (11) angeordnet ist, wobei der besagte Anschlag (22) derart ausgeführt ist, dass er das Einsetzen des Stabes (10), den Austritt und das Anbringen der Heftklammern (2) nicht behindert.

8. Vorrichtung (1) nach irgendeinem der Ansprüche 1 bis 7, **dadurch gekennzeichnet, dass** das Ablagemagazin (11) mehrere Einheiten bestehend aus Öffnung (16) - Sitz (15) - Öffnung (17) umfasst, und dadurch, dass das Ablagemagazin (11) im Verhältnis zum Halter (23) bewegt werden kann, um einen der Sitze (15) in der "Arbeitsposition" zu positionieren.

9. Vorrichtung (1) nach Anspruch 8, **dadurch gekennzeichnet, dass** der vordere Flansch (24) des Halters (23) derart ausgeführt ist, dass er das Zusammenwirken des Verteilerkorridors (27) und der Öffnung (16) des Ablagemagazins (11) in Verbindung mit dem Sitz (15) in der "Arbeitsposition" ermöglicht, und er zumindest teilweise die Öffnungen (16) des Ablagemagazins (11) verschließt, die zu den anderen Sitzen (15) gehören.

10. Vorrichtung (1) nach irgendeinem der Ansprüche 8 oder 9, **dadurch gekennzeichnet, dass** der hintere Flansch (25) des Halters (23) derart ausgeführt ist, dass er das Zusammenwirken seiner Öffnung (26) mit der Öffnung (17) des Ablagemagazins (11) in Verbindung mit dem Sitz (15) in der "Arbeitsposition" ermöglicht, und er die Öffnungen (17) des Ablagemagazins (11) vollständig verschließt, die zu den anderen Sitzen (15) gehören.

11. Vorrichtung (1) nach irgendeinem der Ansprüche 8 oder 10, **dadurch gekennzeichnet, dass** die Bewegung des Ablagemagazins (11) indexiert ist.

12. Vorrichtung (1) nach irgendeinem der Ansprüche 8 bis 11, **dadurch gekennzeichnet, dass** das Ablagemagazin (11) imstande ist, um seine Längsachse zwischen den vorderen (24) und hinteren (25) Flanschen des Halters (23) zu schwenken und vier Sitze (15) umfasst, die gleichförmig um die besagte Längsachse verteilt sind, wobei jeder Sitz (15) im Verhältnis zum benachbarten Sitz (15) um 90° um die besagte Längsachse geschwenkt wird.

13. Vorrichtung (1) nach irgendeinem der Ansprüche 1 bis 12, **dadurch gekennzeichnet, dass** sie ein austauschbares Ablagemagazin (11) umfasst, das in abnehmbarer Form auf dem Halter (23) befestigt ist.

## Claims

1. Device (1) for supplying, and for installing tying clips (2) arranged to maintain two taut wires close to one another and being assembled in order to form a continuous bar (10) of successive tying clips (2), said device (1) **characterised in that** it comprises:
- a storage magazine (11) provided with at least one housing (15) arranged to contain and allow the sliding of a bar (10) of tying clips (2), an opening (16) arranged in line with one of the ends of the housing (15), an orifice (17) arranged in line with the other end of the housing (15) and a piston (18) arranged between the bar (10) and the orifice (17) and able to push the bar (10) of tying clips (2) in the direction of the opening (16) under the action of a fluid under pressure admitted by the orifice (17),
- a support (23) provided with at least one front flange (24) and one rear flange (25) and being able to receive between its front (24) and rear (25) flanges the storage magazine (11), the front flange (24) comprising a distribution passage (27) able to cooperate with the opening (16) in order to receive a tying clip (2) coming from the bar (10) contained in the housing (15), with the rear flange (25) comprising an orifice (26) arranged to be connected to a hose for supplying fluid under pressure and able to cooperate in an approximately watertight manner with the orifice (17) of the storage magazine (11) in order to allow said fluid to enter the housing (15),
- a push rod (30) with reciprocating motion able to slide in said distribution passage (27) in order to detach from the bar (10) and drive the tying clip (2) positioned in said distribution passage (27).

2. Device (1) according to claim 1 **characterised in that** the push rod (30) is such that, when it is set into motion in order to displace a tying clip (2) in the distribution passage (27), it closes off the opening (16) of the storage magazine (11).

3. Device (1) according to any of claims 1 or 2 **characterised in that** the push rod (30) is set into motion by an actuator (31) and returns via a means of return (32) to its initial position wherein it releases the opening (16) of the storage magazine (11).

4. Device (1) according to claim 3 **characterised in that** the actuator (31) is an electromagnet.

5. Device (1) according to any of claims 3 or 4 **characterised in that** the means of return (32) is a return spring or a magnetic field.

6. Device (1) according to any of claims 1 to 5 **characterised in that** the piston (18) is hollow and comprises a rigid bearing face (19) and a peripheral wall (20) coming substantially perpendicularly from the peripheral edge of said bearing face (19) and extending in the direction of the orifice (17), said peripheral wall (20) being flexible and deformable in order to hug the inner wall of said housing (15).

7. Device (1) according to claim 6 **characterised in that** the bearing face (19) comprises a notch (21) able to cooperate with a stop (22) arranged in the opening (16) of the storage magazine (11), said stop (22) being such that it does not prevent the setting in place of the bar (10), the exiting and the installing of tying clips (2).

8. Device (1) according to any of claims 1 to 7 **characterised in that** the storage magazine (11) comprises several ensembles opening (16)- housing (15)-orifice (17) and **in that** the storage magazine (11) is mobile in relation to the support (23) to position one of its housings (15) in "work" position.

9. Device (1) according to claim 8 **characterised in that** the front flange (24) of the support (23) is such that it allows for the cooperation of the distribution passage (27) and of the opening (16) of the storage magazine (11) associated with the housing (15) in "work" position and that it closes off at least partially the openings (16) of the storage magazine (11) associated with the other housings (15).

10. Device (1) according to any of claims 8 or 9 **characterised in that** the rear flange (25) of the support (23) is such that it allows for the cooperation of its orifice (26) with the orifice (17) of the storage magazine (11) associated with the housing (15) in "work" position and that it fully closes off the orifices (17) of the storage magazine (11) associated with the other housings (15).

11. Device (1) according to any of claims 8 or 10 **characterised in that** the movement of the storage magazine (11) is indexed.

12. Device (1) according to any of claims 8 to 11 **characterised in that** the storage magazine (11) is able to pivot about its longitudinal axis between the front (24) and rear (25) flanges of the support (23) and comprises four housings (15) evenly distributed about said longitudinal axis, with each housing (15) being pivoted 90° about said longitudinal axis with respect to the adjacent housing (15).

13. Device (1) according to any of claims 1 to 12 **characterised in that** it comprises an interchangeable storage magazine (11) removably fastened to the support (23).
